# EUROPEAN PATENT APPLICATION

(11) **EP 4 283 545 A1**
(43) Date of publication of application: **29.11.2023**
(21) Application number: 23169833.3
(22) Date of filing: 25.04.2023
(51) Int. Cl.: G06Q 10/0875

(54) **INFORMATION MANAGEMENT SYSTEM AND INFORMATION MANAGEMENT METHOD**

(30) Priority: 23.05.2022 JP 2022083558
(71) Applicant: OMRON Corporation, Kyoto 600-8530 (JP)
(72) Inventor: MORI, Kenichiro, Kyoto-shi, 600-8530 (JP)
(74) Representative: Mewburn Ellis LLP

(57) **Abstract**

An information management method includes acquiring a component serial number identifying an individual of a target component used in each process and a unit serial number (or a product serial number) identifying an individual of an intermediate product (or a product) manufactured by the process according to work order of the process. The information management method includes registering the component serial number in a hierarchy of the target component in the acquired order in a BOM database (51, 51A), and registering the unit serial number (or the product serial number) in a hierarchy of the process in the acquired order in a BOP database (52, 52A).

## Description

### CROSS REFERENCE TO RELATED APPLICATIONS

This nonprovisional application is based on Japanese Patent Application No. 2022-083558 filed on May 23, 2022, with the Japan Patent Office, the entire contents of which are hereby incorporated by reference.

### BACKGROUND OF THE INVENTION

### Field of the Invention

The present disclosure relates to an information management system and an information management method.

### Description of the Background Art

Conventionally, a bill of material (BOM), a bill of process (BOP), and the like are used for product production management. For example, Japanese Patent Laying-Open No. 2018-36899 discloses a system that supports editing of the BOM.

### SUMMARY OF THE INVENTION

In general, data regarding quality of an individual is accumulated for each individual of a product or an intermediate product. The data regarding the quality is accumulated in a database different from the BOM and the BOP. For example, the BOM, the BOP, and the data regarding the quality may be utilized for investigation of a defect cause of the product. However, the BOM, the BOP, and the data regarding the quality are distributed but not cooperated. Therefore, there is a problem that it is difficult to investigate the defect cause of the product.

The present disclosure has been made in view of the above problems, and an object of the present disclosure is to provide an information management system and an information management method capable of easily investigating the defect cause of the product.

According to an example of the present disclosure, an information management system includes a BOM database, a BOP database, a quality database, an acquisition section, and a registration section. The BOM database indicates a hierarchical structure of at least one component constituting a product. The BOP database indicates a hierarchical structure of at least one process producing the product. The quality database associates first identification information identifying an individual of an intermediate product or the product manufactured by the process with a quality data set regarding quality of the individual for each of the at least one process. The acquisition section acquires second identification information identifying an individual of a target component used in the process in the at least one component, and the first identification information corresponding to the intermediate product or the product manufactured in the process according to work order of the process from each of the at least one process. The registration section registers the second identification information in a hierarchy of the target component of the BOM database in the order acquired by the acquisition section in response to the acquisition of the second identification information from each of the at least one process. The registration section registers the first identification information in a hierarchy of the process of the BOP database in the order acquired by the acquisition section in response to the acquisition of the first identification information from each of the at least one process.

According to this disclosure, the first identification information and the second identification information are acquired according to the work order of the process. Then, the first identification information and the second identification information are registered in the BOP database and the BOM database in the acquired order. Consequently, the user checks the registration order of the first identification information and the second identification information in the BOP database and the BOM database, thereby easily specifying the intermediate product and the component constituting the target individual of the product. Furthermore, the user can specify a quality data set regarding the quality of each individual of the product or the intermediate product based on the quality database. Consequently, the user can use the first identification information of a defective individual as a key to specify the quality of the individual, the quality of the intermediate product constituting the individual, an individual of the component constituting the individual, and the like. Thus, the user can easily investigate the defect cause of the product.

In the above disclosure, the information management system further includes a search section configured to search the second identification information of each individual of the at least one component constituting a target individual of the product using the BOM database and the BOP database.

According to this disclosure, the user can easily specify the individual of the component constituting the defective individual by checking a search result by the search section.

In the above disclosure, the BOM database includes supply source data that associates the second identification information of the individual with third identification information identifying a supply source of the individual for each individual of at least one component. The information management system further includes an inquiry section configured to specify third identification information corresponding to the second identification information searched by the search section based on the BOM database, and transmit inquiry about quality of the individual indicated by the second identification information searched by the search section to a supply source indicated by the specified third identification information.

According to this disclosure, the user can easily check the quality of the individual of the component constituting a defective product.

In the above disclosure, the quality data set includes item data indicating each of a plurality of items. The information management system further includes: a provision permission database configured to indicate provision permission of each of the plurality of items to a supply destination of the product; and an answer section configured to generate answer information in response to receiving an inquiry about the quality of the target individual of the product from the supply destination, and transmit the generated answer information to the supply destination. The answer section reads the quality data set of the target individual from the quality database, and specifies at least one item permitted to be provided, based on the provision permission database. The answer section extracts item data corresponding to each of the at least one specified item from the read quality data set, and includes the extracted item data in the answer information.

According to this disclosure, the answer information including the item data corresponding to the item permitted to be provided can be immediately answered.

According to another example of the present disclosure, an information management method uses a BOM database, a BOP database, and a quality database. The BOM database indicates a hierarchical structure of at least one component constituting a product. The BOP database indicates a hierarchical structure of at least one process producing the product. The quality database associates first identification information identifying an individual of an intermediate product or the product manufactured by the process with a quality data set regarding quality of the individual for each of the at least one process. The information management method includes first to third steps. In the first step, second identification information identifying an individual of a target component used in the process in at least one component and first identification information corresponding to an intermediate product or a product manufactured in the process are acquired according to work order of the process from each of at least one process. In the second step, the second identification information is registered in a hierarchy of the target component of the BOM database in the acquired order in response to the acquisition of the second identification information from each of the at least one process. In the third step, the first identification information is registered in the hierarchy of the process of the BOP database in the acquired order in response to the acquisition of the first identification information from each of at least one process. This disclosure also allows the user to easily investigate the defect cause of the product.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a view illustrating an outline of an information management method according to an embodiment.
Fig. 2 is a view illustrating a conventional system utilized to investigate a cause of a product defect.
Fig. 3 is a view illustrating a configuration example of an information management system of the embodiment.
Fig. 4 is a schematic diagram illustrating an example of a hardware configuration of a server of the embodiment.
Fig. 5 is a block diagram illustrating a hardware configuration example of a manufacturing controller of the embodiment.
Fig. 6 is a view illustrating an example of a functional configuration of an information management system 1A.
Fig. 7 is a view illustrating an example of a functional configuration of an information management system 1B.
Fig. 8 is a view illustrating an example of a database included in a database group.
Fig. 9 is a view illustrating examples of a BOM database and a BOP database of the server in Fig. 6.
Fig. 10 is a view illustrating examples of the BOP database and a BOE database of the server in Fig. 6.
Fig. 11 is a view illustrating a data item in of the BOM database of the server in Fig. 6.
Fig. 12 is a view illustrating an example of a quality database corresponding to a housing unit assembling process.
Fig. 13 is a view illustrating an example of the quality database corresponding to a motor inspection process.
Fig. 14 is a view illustrating an example of the quality database corresponding to a housing molding process.
Fig. 15 is a diagram illustrating an example of the quality database corresponding to a housing inspection process.
Fig. 16 is a view illustrating an example of a provision permission database in Fig. 7.
Fig. 17 is a flowchart illustrating a flow of pre-processing.
Fig. 18 is a flowchart illustrating a flow of information management processing.
Fig. 19 is a view illustrating an example of the BOM database in which a component serial number of a used component is registered.
Fig. 20 is a flowchart illustrating a flow of processing of a subroutine in step S21 in Fig. 18.
Fig. 21 is a view illustrating a method of investigating a defect cause of a motor.
Fig. 22 is a flowchart illustrating a flow of answer processing.
Fig. 23 is a view illustrating a modification of the BOM database.

### DESCRIPTION OF THE PREFERRED EMBODIMENTS

With reference to the drawings, an embodiment of the present invention will be described in detail. The same or equivalent portion in the drawings is denoted by the same reference numeral, and the description will not be repeated. The following modifications described below may selectively be combined as appropriate.

### §1 Application example

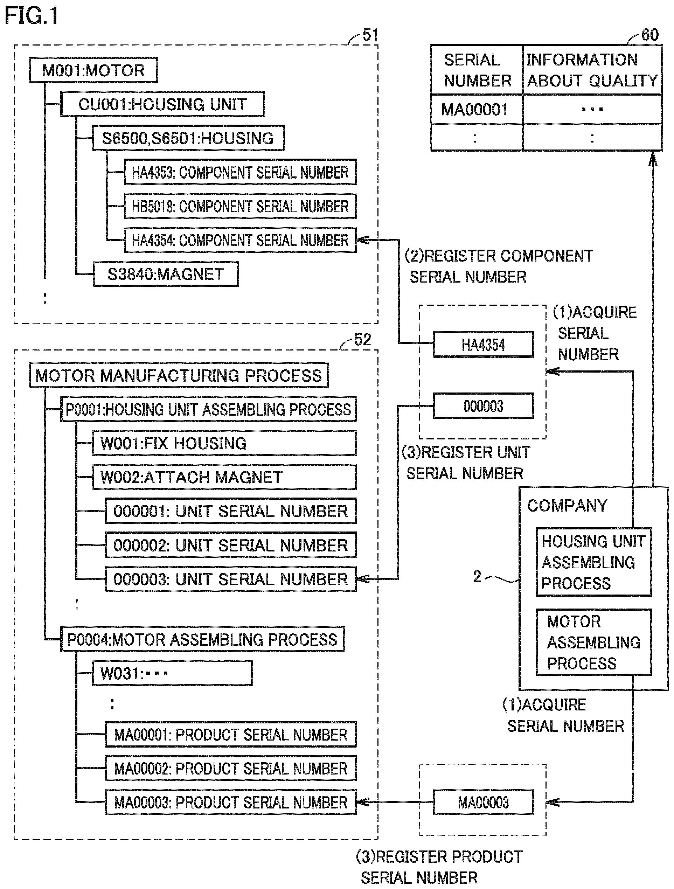

Fig. 1 is a view illustrating an outline of an information management method according to an embodiment. As illustrated in Fig. 1, in the information management method, information regarding production of a company 2 is managed using a BOM database 51, a BOP database 52, and a quality database 60.

BOM database 51 indicates a hierarchical structure (tree structure) of at least one component constituting a product produced in company 2. BOP database 52 indicates a hierarchical structure of at least one process producing the product.

Quality database 60 associates first identification information identifying an individual of the product or an intermediate product produced in company 2 with a quality data set regarding quality of the individual. The intermediate product includes a unit constituting the product. Hereinafter, it is assumed that a "unit serial number" is used as the first identification information identifying the individual of the intermediate product, and a "product serial number" is used as the first identification information identifying the individual of the product.

The quality data set indicates information about the quality of the individual of the product or the intermediate product, and includes data indicating directly the quality, and data indicating information indirectly regarding the quality of the product or the intermediate product. For example, the data directly indicating the quality of the product or the intermediate product includes inspection data indicating the quality of processing and data indicating a characteristic (a dimension, an electrical property, and the like) of the product or the intermediate product. For example, the data indicating the information indirectly regarding the quality of the product or the intermediate product includes facility data in a factory, history data of processing and assembling work, worker data indicating a worker name, a time stamp (a work start time stamp, a work end time stamp, and the like), processing method data, data indicating a material, and processing condition data.

The information management method includes following steps (1) to (3) in order to cooperate BOM database 51, BOP database 52, and quality database 60.

Step (1): From each of at least one process of company 2, second identification information identifying the individual of a target component used in the process and the unit serial number (or the product serial number) identifying the individual of the intermediate product (or the product) manufactured in the process are acquired according to work order of the process. Hereinafter, it is assumed that a "component serial number" is used as the second identification information.

Step (2): In response to acquisition of the component serial number from each of at least one process of company 2, the component serial number is registered in the hierarchy of target components in the order of acquisition in BOM database 51.

Step (3): In response to acquisition of the unit serial number (or the product serial number) from each of at least one process of company 2, the unit serial number (or the product serial number) is registered in the hierarchy of the process in the order of acquisition in BOP database 52.

In the example of Fig. 1, a component serial number "HA4354" of a target component "housing" used in a "housing unit assembling process" is acquired from the "housing unit assembling process". Accordingly, in step (2), the component serial number "HA4354" is registered in the hierarchy of the component "housing" in BOM database 51. Furthermore, a unit serial number "000003" is acquired from the "housing unit assembling process". Accordingly, in step (3), the unit serial number "000003" is registered in the hierarchy of the "housing unit assembling process" in BOP database 52.

Furthermore, in the example of Fig. 1, thereafter, a product serial number "MA0003" is acquired from a "motor assembling process". In response, in step (3), a product serial number "MA00003" is registered in the hierarchy of the "motor assembling process" in BOP database 52.

In step (1), the unit serial number (or the product serial number) and the component serial number are acquired according to the work order of the process. Furthermore, in steps (2), (3), the unit serial number (or the product serial number) and the component serial number are registered in BOP database 52 and the BOM database 51, in the acquired order. Consequently, when the registration order of the unit serial number, the product serial number, and the component serial number is checked in BOP database 52 and BOM database 51, the intermediate product and the component constituting the target individual of the product can be easily specified.

For example, the user can easily specify that the product with the product serial number "MA00003" registered third in BOP database 52 is manufactured from the intermediate product having the unit serial number "000003" registered third in BOP database 52. Similarly, the user can easily specify that the intermediate product having the unit serial number "000003" includes the component having the component serial number "HA4354" registered third in BOM database 51.

Furthermore, the user can specify a quality data set regarding the quality of each individual of the product or the intermediate product based on quality database 60.

Accordingly, the user can use the product serial number of a defective individual as a key to specify the quality of the individual, the quality of the intermediate product constituting the individual, the individual of the component constituting the individual, and the like. Thus, the user can easily investigate the defect cause of the product.

### §2 Specific example

### <Conventional traceability system>

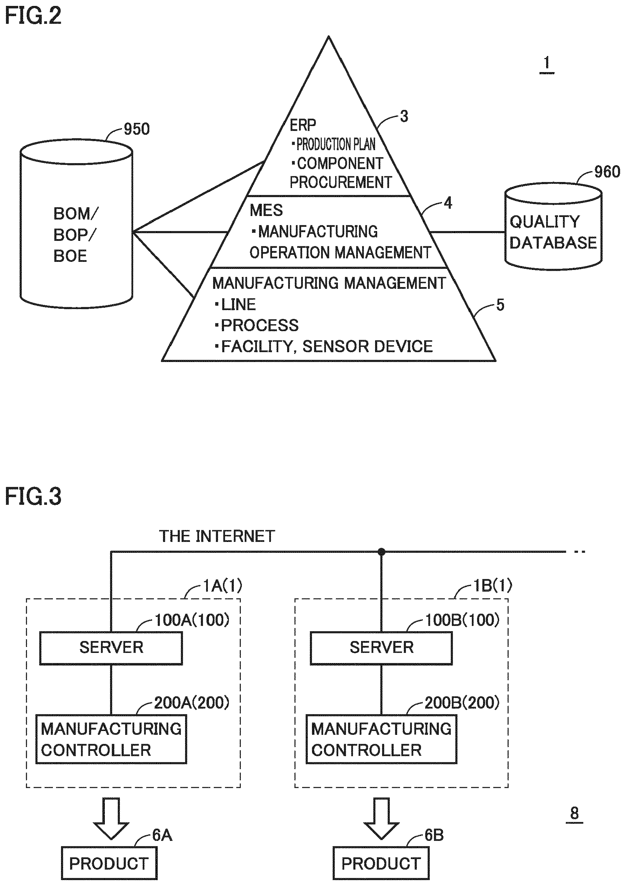

Fig. 2 is a view illustrating a conventional system utilized to investigate a cause of a product defect. As illustrated in Fig. 2, the company includes an enterprise resource planning (ERP) system 3, a manufacturing execution system (MES) 4, and a manufacturing management system 5 as a product production management system. Further, the company has a database group 950 including a BOM database, a BOP database, and a bill of equipment (BOE) database, and a quality database 960 indicating the quality of the product.

ERP system 3 monitors a production plan of management and component procurement along the production plan. The component is specified from the BOM database. ERP system 3 designates a component number, a delivery date, and a quantity to a supplier of the component, and orders the component.

MES 4 manages information required for a production operation of a factory such as a production schedule, a preparation, quality, a component stock, a product stock, maintenance, and a facility according to the production plan managed by ERP system 3, and generates a production instruction based on these pieces of information. MES 4 manages these pieces of information using the BOP database and the BOE database.

Manufacturing management system 5 controls a processing assembly line, a process, and a facility using a programmable logic controller (PLC), a sensor device, and the like in accordance with the production instruction from MES 4. In addition, a work instruction document required for manufacturing the product is produced using the BOM database and the BOP database and distributed to the worker.

Quality database 960 indicates facility data in the factory, a history of processing and assembling work, a time stamp, processing data, inspection data such as the quality of the product, the serial number, a lot number, and the like. These pieces of information are acquired from the facility, the worker, the PLC constituting manufacturing management system 5, and the sensor device.

As illustrated in Fig. 2, database group 950 including the BOM database, the BOP database, and the BOE database is not cooperated with quality database 960 indicating the quality of the product. That is, division of the information is generated. For this reason, it takes time and effort to investigate the defect cause.

### <Overall configuration of information management system>

Fig. 3 is a view illustrating a configuration example of an information management system of the embodiment. As illustrated in Fig. 3, an information providing system 8 includes an information management system for each company. Information providing system 8 in Fig. 3 includes information management systems 1A, 1B, •••. Information management systems 1A, 1B, ••• provide information to each other through the Internet. Hereinafter, when information management systems 1A, 1B, ••• are not particularly distinguished, each of information management systems 1A, 1B, ••• is referred to as an "information management system 1".

Information management system 1A is disposed in a manufacturer that manufactures a product 6A. Information management system 1B is disposed in a component supplier that manufactures a product 6B. Product 6B is used as a component of product 6A, and is delivered to the manufacturer in which information management system 1A is disposed. Information providing system 8 can further include, in addition to information management systems 1A, 1B, information management system 1 disposed in another component supplier that supplies a component of product 6A.

Information management system 1 of each company includes a server that manages information regarding a product produced by the company, and a manufacturing controller that controls production of the manufacturing. That is, information management system 1A includes a server 100A that manages the information regarding product 6A and a manufacturing controller 200A that controls the production of product 6A. Information management system 1B includes a server 100B that manages the information about product 6B and a manufacturing controller 200B that controls the production of product 6B. Hereinafter, in a case where servers 100A, 100B, ••• are not particularly distinguished, each of servers 100A, 100B, ••• is referred to as a "server 100". When manufacturing controllers 200A, 200B, ••• are not particularly distinguished, each of manufacturing controllers 200A, 200B, ••• is referred to as a "manufacturing controller 200". For example, servers 100A, 100B, ••• can communicate with each other through the Internet. For example, manufacturing controller 200 is implemented by the PLC.

### <Hardware configuration of server>

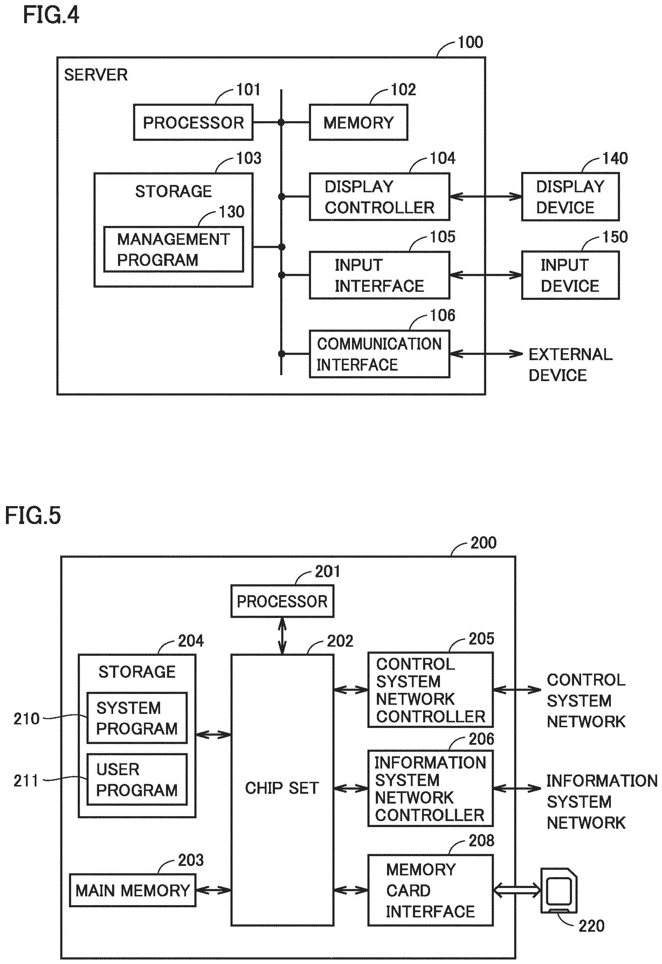

Fig. 4 is a schematic diagram illustrating an example of a hardware configuration of a server of the embodiment. As illustrated in Fig. 4, server 100 typically has a structure according to a general-purpose computer architecture. Specifically, server 100 includes a processor 101 such as a central processing unit (CPU) or a micro-processing unit (MPU), a memory 102, a storage 103, a display controller 104, an input interface 105, and a communication interface 106. These units are data-communicably connected to each other through a bus.

Processor 101 expands various programs stored in storage 103 on memory 102, and executes the programs, thereby implementing various pieces of processing of the embodiment.

Memory 102 is typically a volatile storage device such as a dynamic random access memory (DRAM), and stores the program and the like read from storage 103.

Storage 103 is typically a non-volatile magnetic storage device such as a hard disk drive. Storage 103 stores a management program 130 executed by processor 101. Management program 130 to be installed in storage 103 is distributed while stored in a memory card or the like.

Display controller 104 is connected to a display device 140, and outputs a signal displaying various pieces of information to display device 140 according to an internal command from processor 101.

Input interface 105 serves as an interface for data transmission between processor 101 and an input device 150 such as a keyboard, a mouse, a touch panel, or a dedicated console. That is, input interface 105 receives an operation instruction given by the user operating input device 150.

Communication interface 106 serves as an interface for data transmission between processor 101 and an external device (for example, manufacturing controller 200 and another server 100). Management program 130 to be stored in storage 103 may be downloaded from a distribution server or the like through communication interface 106.

When the computer having the structure following the general-purpose computer architecture is used, an operating system (OS) providing a basic function of the computer may be installed in addition to the application providing the function of the embodiment. In this case, the program of the embodiment may call a required module in a predetermined order and timing in program modules provided as a part of the OS to execute processing. That is, the program itself of the embodiment does not include the module as described above, and sometimes the processing is executed in cooperation with the OS.

Alternatively, some or all of the functions provided by the execution of management program 130 may be implemented as a dedicated hardware circuit.

### <Hardware configuration of manufacturing controller>

Fig. 5 is a block diagram illustrating a hardware configuration example of a manufacturing controller of the embodiment. As illustrated in Fig. 5, manufacturing controller 200 includes a processor 201 such as a CPU or an MPU, a chip set 202, a main memory 203, a storage 204, a control system network controller 205, an information system network controller 206, and a memory card interface 208.

Processor 201 reads various programs stored in storage 204, expands the various programs in main memory 203, and executes the various programs, thereby implementing a control arithmetic operation controlling a control target. Chip set 202 controls the data transmission and the like between processor 201 and each component.

Storage 204 stores a system program 210 that implements basic processing and a user program 211 that implements the control arithmetic operation.

Control system network controller 205 controls data exchange with the control target through a control system network.

Information system network controller 206 controls the data exchange with external devices (including server 100) through an information system network.

Memory card interface 208 is configured such that a memory card 220 is detachable, and can write data to memory card 220 and read various data (such as a user program) from memory card 220.

Although the configuration example in which the required function is provided by processor 201 executing the program has been illustrated in Fig. 5, some or all of these provided functions may be mounted using the dedicated hardware circuit (for example, the ASIC or the FPGA). In addition, a main part of manufacturing controller 200 may be implemented using hardware (for example, an industrial personal computer based on a general-purpose personal computer) according to a general-purpose architecture. In this case, the plurality of OSs having different uses may be executed in parallel using a virtualization technology, and the required application may be executed on each OS.

### <Functional configuration of information management system>

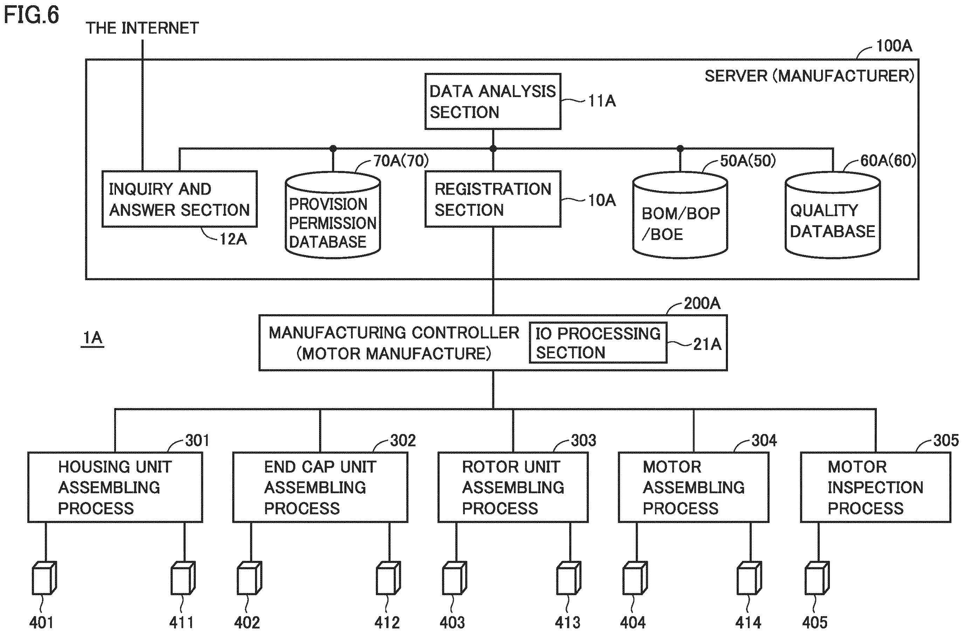

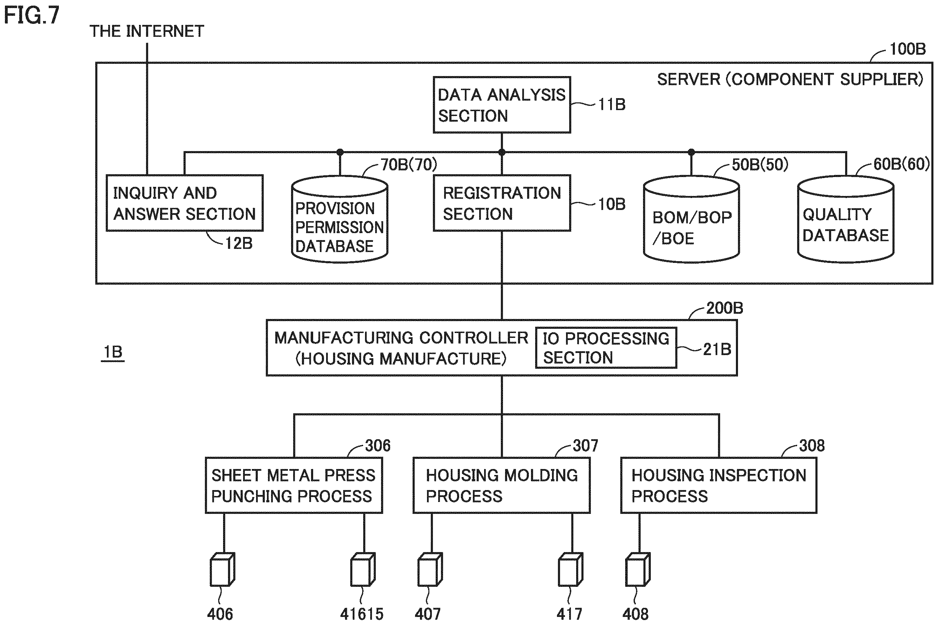

Fig. 6 is a view illustrating an example of a functional configuration of an information management system 1A. Fig. 7 is a view illustrating an example of a functional configuration of an information management system 1B.

The control target of manufacturing controller 200A in Fig. 6 includes a plurality of processes manufacturing a motor as product 6A (see Fig. 3). The motor is manufactured by combining a housing unit, an end cap unit, and a rotor unit. Accordingly, the control target of manufacturing controller 200A includes a housing unit assembling process 301, an end cap unit assembling process 302, a rotor unit assembling process 303, a motor assembling process 304, and a motor inspection process 305.

A code reader 401 and a laser marker 411 are provided in housing unit assembling process 301. A code reader 402 and a laser marker 412 are provided in end cap unit assembling process 302. A code reader 403 and a laser marker 413 are provided in rotor unit assembling process 303. A code reader 404 and a laser marker 414 are provided in motor assembling process 304. A code reader 405 is provided in motor inspection process 305.

Each of code readers 401 to 405 reads a QR code (registered trademark) of a component, an intermediate product, or a product that has been conveyed to a corresponding process. The QR code indicates a serial number that identifies the component, the intermediate product, or the product. For example, code reader 401 reads the QR code marked on the housing conveyed to housing unit assembling process 301, and outputs the component serial number indicated by the read QR code. Code reader 405 reads the QR code marked on the motor conveyed to motor inspection process 305, and outputs the product serial number indicated by the read QR code.

Laser markers 411 to 414 mark the intermediate product or the product to be output from the corresponding process with the QR code (registered trademark). The QR code indicates a serial number identifying the intermediate product or the product. The QR codes marked by laser marker 411 to 414 are uniquely designated by manufacturing controller 200A or the facility installed in the corresponding process. For example, laser marker 414 marks the product serial number on the motor manufactured by motor assembling process 304.

Manufacturing controller 200A includes an IO processing section 21A that performs data input and output processing with the facility installed in the process. Processor 201 (see Fig. 5) included in manufacturing controller 200A executes user program 211, thereby implementing IO processing section 21A.

For example, IO processing section 21A outputs data indicating an operation instruction, data indicating the QR code to be marked on the intermediate product or the product, and the like to the facility installed in each process.

IO processing section 21A acquires at least one item data regarding the quality of the intermediate product or the product manufactured by each process from each process. The item data indicates a value, a content, and the like of the item regarding the quality. The serial number (the unit serial number or the product serial number) of the corresponding individual is added to the at least one item data. For example, IO processing section 21A receives data (time stamp) indicating the time when code reader 401 to 405 read the QR code, data indicating a processing condition, data indicating a processing method, and data indicating the quality as item data.

Furthermore, IO processing section 21A operates as an acquisition section that acquires the component serial number identifying the individual of the component used in the process and the unit serial number (or the product serial number) identifying the individual of the intermediate product or the product manufactured in the process according to the work order of the process from each process. Specifically, every time the code reader installed in each process reads the QR code of the component, IO processing section 21A acquires the component serial number indicated by the QR code. Each time the laser marker installed in each process marks the QR code on the intermediate product or the product, IO processing section 21A acquires the unit serial number or the product serial number indicated by the QR code.

For example, every time the individual of the housing unit is manufactured by housing unit assembling process 301, IO processing section 21A acquires the component serial number identifying the individual of the component used for the individual of the housing unit and the unit serial number identifying the individual of the housing unit from housing unit assembling process 301. In addition, IO processing section 21A acquires the product serial number marked on the individual of the motor from motor assembling process 304 each time the individual of the motor is manufactured.

The control target of manufacturing controller 200B in Fig. 7 includes a plurality of processes manufacturing the housing as product 6B (see Fig. 3). The housing is used as the component of the motor that is product 6A. Specifically, the control target of manufacturing controller 200B includes a sheet metal press punching process 306, a housing molding process 307, and a housing inspection process 308.

A code reader 406 and a laser marker 416 are provided in sheet metal press punching process 306. A code reader 407 and a laser marker 417 are provided in housing molding process 307. A code reader 408 is provided in housing inspection process 308.

Each of code readers 406 to 408 reads the QR code of the component, the intermediate product, or the product that has been conveyed to the corresponding process. The QR code indicates a serial number that identifies the component, the intermediate product, or the product. For example, code reader 406 reads the QR code marked on a metal plate conveyed to sheet metal press punching process 306, and outputs the component serial number indicated by the read QR code. Code reader 408 reads the QR code marked on the manufactured housing, and outputs the product serial number indicated by the read QR code.

Laser marker 416, 417 marks the QR code on the intermediate product or the product to be output from the corresponding process. The QR code indicates a serial number identifying the intermediate product or the product. The QR code marked by laser marker 416, 417 is uniquely specified by manufacturing controller 200B or the facility installed in the corresponding process.

Manufacturing controller 200B includes an IO processing section 21B that performs the data input and output processing with the facility installed in each process. Processor 201 (see Fig. 5) included in manufacturing controller 200B executes user program 211, thereby implementing IO processing section 21B.

For example, IO processing section 21B outputs the data indicating the operation command, the data indicating the QR code to be marked on the intermediate product or the product, and the like to the facility installed in the process.

IO processing section 21B acquires at least one item data regarding the quality of each individual of the intermediate product or the product manufactured by the process from each process. The item data indicates a value, a content, and the like of the item regarding the quality. The serial number (the unit serial number or the product serial number) of the corresponding individual is added to the at least one item data. For example, IO processing section 21B receives the data (work start time stamp) indicating the time when code reader 406 to 408 reads the QR code, the data indicating the processing condition, the data indicating the processing method, the data indicating the value of the parameter (dimension or the like) representing the quality, and the like as the item data.

Furthermore, IO processing section 21B operates as an acquisition section that acquires the component serial number identifying the individual of the component used in the process in at least one component from each process, and the unit serial number (or the product serial number) identifying the individual of the intermediate product or the product manufactured in the process according to the work order of the process. Specifically, IO processing section 21B acquires the component serial number indicated by the QR code every time the code reader installed in each process reads the QR code of the component. Each time the laser marker installed in each process marks the QR code on the intermediate product or the product, IO processing section 21B acquires the unit serial number or the product serial number indicated by the QR code.

For example, IO processing section 21B acquires the component serial number identifying the individual of the metal plate and the unit serial number identifying the individual of the metal piece from sheet metal press punching process 306 each time the metal piece is punched out from the metal plate. In addition, IO processing section 21B acquires the product serial number marked on the individual of the housing from housing molding process 307 every time the individual of the housing is manufactured.

As illustrated in Figs. 6 and 7, servers 100A, 100B have the similar functional configuration. That is, server 100A in Fig. 6 includes a registration section 10A, a data analysis section 11A, an inquiry and answer section 12A, a database group 50A, a quality database 60A, and a provision permission database 70A. Server 100B in Fig. 7 includes a registration section 10B, a data analysis section 11B, an inquiry and answer section 12B, a database group 50B, a quality database 60B, and a provision permission database 70B. Hereinafter, when database groups 50A, 50B are not particularly distinguished, each of database groups 50A, 50B is referred to as a "database group 50". When provision permission databases 70A, 70B are not particularly distinguished, each of provision permission databases 70A, 70B is referred to as a "provision permission database 70".

Registration section 10A, data analysis section 11A, and inquiry and answer section 12A are implemented by processor 101 (see Fig. 4) of server 100A executing management program 130. Database group 50A, quality database 60A, and provision permission database 70A are implemented by memory 102 and storage 103 of server 100A. Registration section 10B, data analysis section 11B, and inquiry and answer section 12B are implemented by processor 101 of server 100B executing management program 130. Database group 50B, quality database 60B, and provision permission database 70B are implemented by memory 102 and storage 103 of server 100B.

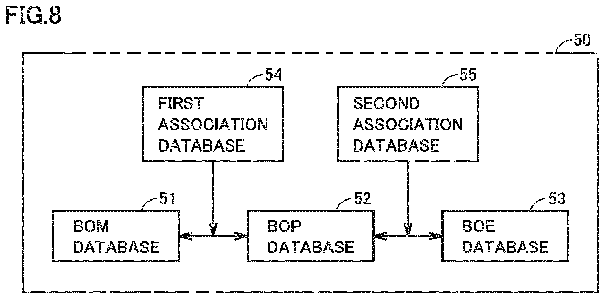

Fig. 8 is a view illustrating an example of a database included in a database group. As illustrated in Fig. 8, database group 50 includes BOM database 51, BOP database 52, a BOE database 53, a first association database 54, and a second association database 55.

BOM database 51 indicates the hierarchical structure of at least one component constituting the product. For example, BOM database 51 of server 100A indicates the hierarchical structure of at least one component constituting the motor. On the other hand, BOM database 51 of server 100B indicates the hierarchical structure of at least one component constituting the housing.

BOP database 52 indicates the hierarchical structure of at least one process producing the product. BOE database 53 indicates a hierarchical structure of at least one facility producing the product.

First association database 54 indicates a correspondence relationship between each of at least one process producing the product and the component used in the process. Second association database 55 indicates a correspondence relationship between each of at least one process and the facility used in the process.

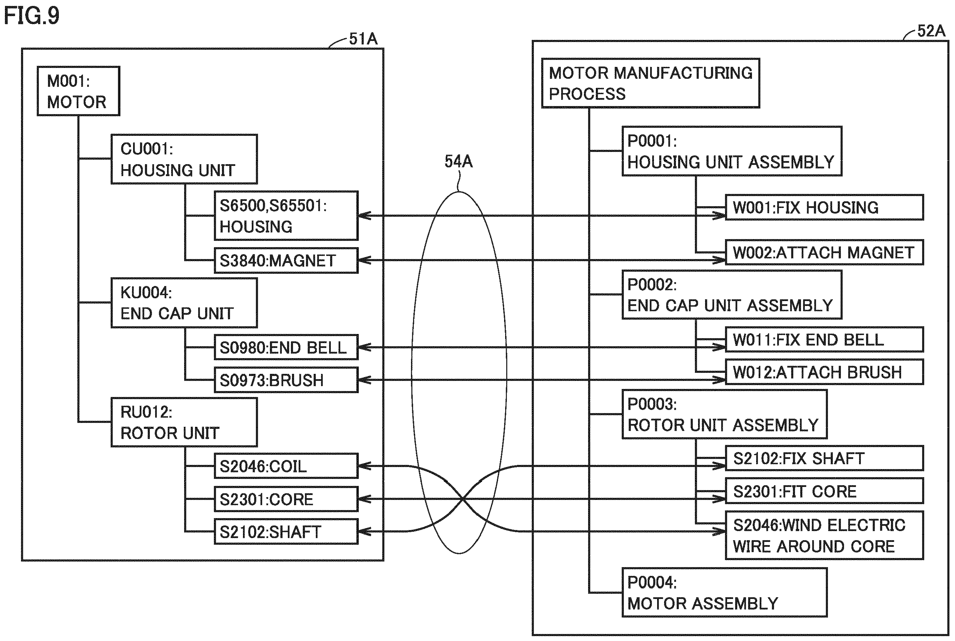

Fig. 9 is a view illustrating examples of a BOM database and a BOP database of the server in Fig. 6. As illustrated in Fig. 9, a BOM database 51A of server 100A illustrates the hierarchical structure of components "housing unit", "end cap unit", "rotor unit", "housing", "magnet", "end bell", "brush", "coil", "core", and "shaft" that constitute the motor that is the product. A BOP database 52A of server 100A indicates the hierarchical structure of processes manufacturing the motor, namely, "housing unit assembly", "end cap unit assembly", "rotor unit assembly", "motor assembly", "fix housing", "attach magnet", "fix end bell", "attach brush", "fix shaft", "fit core", and "wind electric wire around core".

A first association database 54A associates the component indicated by BOM database 51A with the process indicated by BOP database 52A. For example, first association database 54A associates the component "housing" with the process "fix housing" using the component "housing". In this manner, BOM database 51A and BOP database 52A are correlated with each other by first association database 54A.

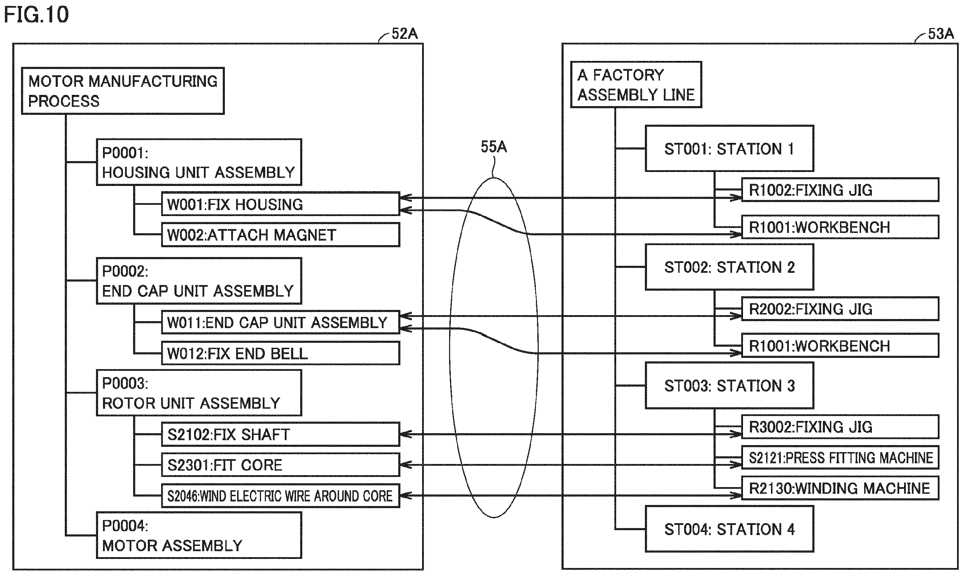

Fig. 10 is a view illustrating examples of the BOP database and a BOE database of the server in Fig. 6. As illustrated in Fig. 10, a BOE database 53A of server 100A illustrates the hierarchical structure of facilities "station 1", "station 2", "station 3", "station 4", "fixing jig 1", "workbench 1", "fixing jig 2", "workbench 2", "fixing jig 3", "press fitting machine", and "winding machine" that manufacture the motor that is the product.

A second association database 55A associates the process indicated by BOP database 52A with the facility indicated by BOE database 53A. For example, second association database 55A associates the process "fix housing" with the facilities "fixing jig 1" and "workbench 1" used in the process. In this manner, BOP database 52A and BOE database 53A are correlated with each other by second association database 55A.

BOM database 51 includes, for each individual of each component, supply source data that associates the component serial number of the individual with third identification information identifying a supply source of the individual. Hereinafter, it is assumed that a "supplier number" is used as the third identification information.

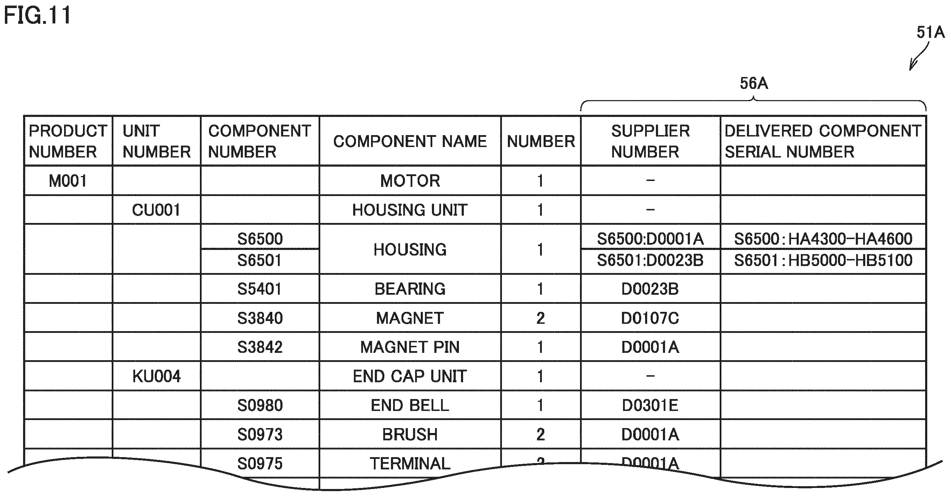

Fig. 11 is a view illustrating a data item in of the BOM database of the server in Fig. 6. As illustrated in Fig. 11, BOM database 51A includes supply source data 56A configured by data items "supplier number" and "delivered component serial number". Specifically, supply source data 56A associates the supplier number "D0001A" of the supply source supplying the component "housing" of the component number "S6500" with the component serial numbers "HA4300" to "HA4600" identifying the individual of the component. Furthermore, supply source data 56A associates the supplier number "D0023B" of the supply source supplying the component "housing" of the component number "S6501" with the component serial numbers "HB5000" to "HB5100" identifying the individual of the component.

Quality database 60A in Fig. 6 associates the unit serial number (or product serial number) identifying the individual of the intermediate product (or product) manufactured by the process with the quality data set regarding the quality of the individual for each process of the control target of manufacturing controller 200A. The quality data set includes the item data indicating each of a plurality of items.

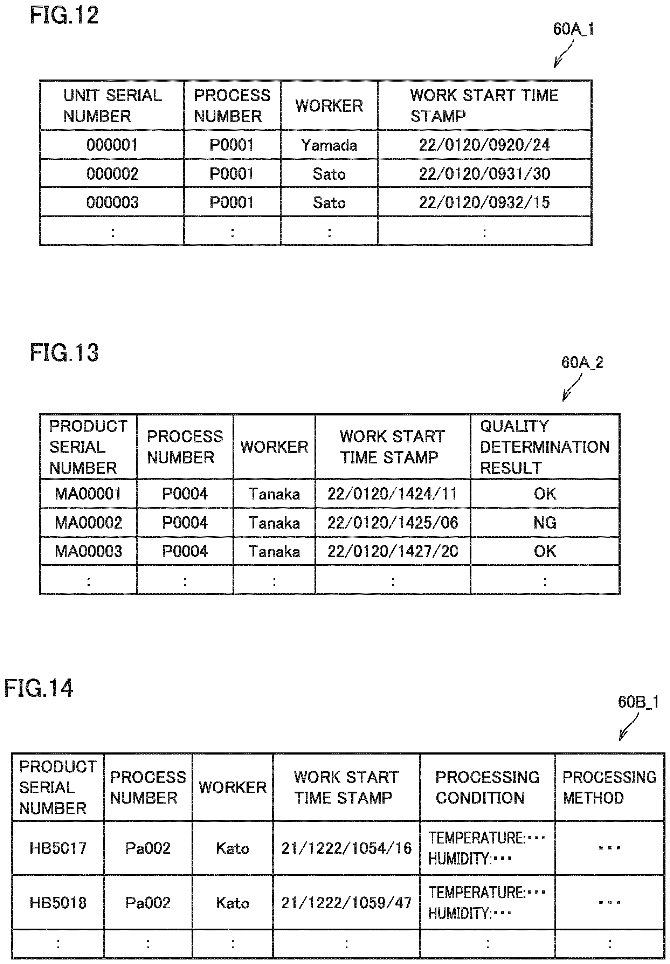

Fig. 12 is a view illustrating an example of a quality database corresponding to a housing unit assembling process. A quality database 60A_1 in Fig. 12 associates the unit serial number with the item data indicating each of items "process number", "worker name", and "work start time stamp" for each individual of the housing unit. The item "process number" identifies the process in which the individual having the corresponding unit serial number is manufactured. The item "worker name" identifies the worker who manufactured the individual having the corresponding unit serial number. The item "work start time stamp" indicates the start time of the work on the individual having the corresponding unit serial number.

Fig. 13 is a view illustrating an example of the quality database corresponding to a motor inspection process. A quality database 60A_2 in Fig. 13 associates the product serial number with the item data indicating each of items "process number", "worker name", "work start time stamp", and "quality determination result" for each individual of the motor. The item "quality determination result" indicates the quality of the individual having the corresponding product serial number.

Quality database 60B in Fig. 7 associates a unit serial number (or product serial number) identifying the individual of the intermediate product or the product manufactured by the process with the quality data set regarding the quality of the individual for each process of the control target of manufacturing controller 200B. The quality data set includes the item data indicating each of a plurality of items.

Fig. 14 is a view illustrating an example of the quality database corresponding to a housing molding process. A quality database 60B_1 in Fig. 14 associates the product serial number with the item data indicating each of items "process number", "worker name", "work start time stamp", "processing condition", and "processing method" for each individual of the housing. The item "processing condition" indicates the processing condition when the individual having the corresponding product serial number is manufactured. The item "processing method" indicates the processing method when the individual having the corresponding product serial number is manufactured.

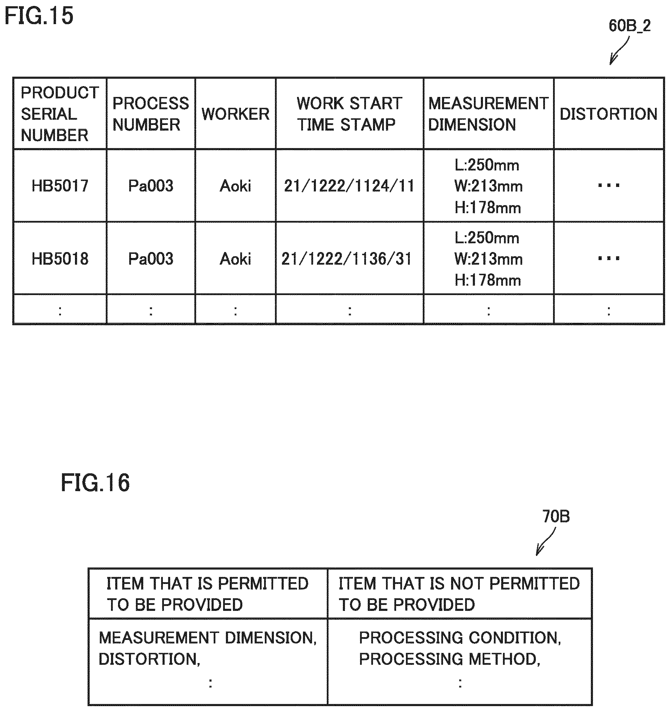

Fig. 15 is a diagram illustrating an example of the quality database corresponding to a housing inspection process. A quality database 60B_2 in Fig. 15 associates the product serial number with item data of each of items "process number", "worker name", "work start time stamp", "measurement dimension", and "distortion" for each individual of the housing. The item "measured dimension" indicates the dimension of the individual having the corresponding product serial number. The item "distortion" indicates a distortion amount of the individual with having corresponding product serial number.

Provision permission database 70A in Fig. 6 indicates provision permission of each of the plurality of items indicated by quality database 60A to a supply destination for the motor that is the product. Similarly, provision permission database 70B in Fig. 7 indicates provision permission of each of the plurality of items indicated by quality database 60B to the supply destination for the housing that is the product.

Fig. 16 is a view illustrating an example of a provision permission database in Fig. 7. Provision permission database 70B in Fig. 16 indicates items "measurement dimension", "distortion", ••• as items that are permitted to be provided, and indicates items "processing condition", "processing method", ••• as items that are not permitted to be provided.

Registration section 10A in Fig. 6 registers the data in BOM database 51A and BOP database 52A included in database group 50A and quality database 60A. Registration section 10B in Fig. 7 registers the data in BOM database 51 and BOP database 52 included in database group 50B and quality database 60B. Because the processing contents of registration sections 10A, 10B are similar, only the processing of registration section 10A will be described below.

When manufacturing controller 200A acquires at least one item data from each process, registration section 10A registers the at least one item data in quality database 60A corresponding to the process.

In addition, when manufacturing controller 200A acquires the component serial number of the target component from each process, registration section 10A registers the component serial number in the hierarchy of the target component in BOM database 51A. Specifically, when manufacturing controller 200A acquires the component serial number from each process, registration section 10A specifies the target component to be used in the process using first association database 54A. Then, registration section 10A registers the component serial numbers in the hierarchy of the target components in the order acquired by manufacturing controller 200A in BOM database 51A.

Furthermore, when manufacturing controller 200A acquires the serial number of the intermediate product or the product manufactured by the process from each process, registration section 10A registers the serial number in the hierarchy of the process in the order acquired in BOP database 52A.

Data analysis section 11A illustrated in Fig. 6 performs data analysis using database group 50A and quality database 60A. Data analysis section 11B in Fig. 7 performs data analysis using database group 50B and quality database 60B.

For example, data analysis section 11A operates as a search section that searches the component serial number of each individual of at least one component constituting the target individual of the product using BOM database 51A, BOP database 52A, and first association database 54A. In addition, data analysis section 11A searches the facility used to manufacture the target individual using BOE database 53A and second association database 55A. Data analysis section 11B also executes the similar search processing.

Inquiry and answer section 12A in Fig. 6 transmits inquiry to another server 100 and transmits answer information about inquiry to another server 100. Inquiry and answer section 12B in Fig. 7 also transmits inquiry to another server 100 and transmits the answer information about inquiry to another server 100.

For example, inquiry and answer section 12A specifies the supplier number corresponding to the component serial number searched by data analysis section 11A based on BOM database 51A. Then, inquiry and answer section 12A transmits the inquiry about the quality of the individual indicated by the component serial number searched by data analysis section 11A to server 100 (for example, server 100B) of the component supplier indicated by the specified supplier number.

For example, inquiry and answer section 12B generates the answer information in response to receiving the inquiry about the quality of the target individual from the supply destination of the housing that is the product, and transmits the generated answer information to the supply destination. Specifically, inquiry and answer section 12B reads the quality data set of the target individual from quality database 60B. Inquiry and answer section 12B specifies at least one item permitted to be provided to the supply destination based on provision permission database 70B. Inquiry and answer section 12B extracts the item data corresponding to each of the specified at least one item from the read quality data set, and includes the extracted item data in the answer information.

### <Flow of pre-processing>

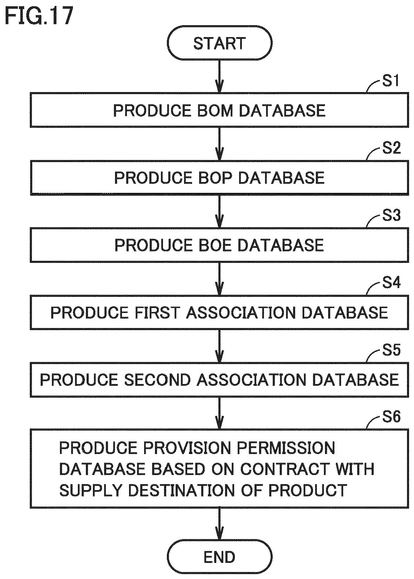

Fig. 17 is a flowchart illustrating a flow of pre-processing. The pre-processing is executed before a production start of the product. The flowchart in Fig. 17 is executed in each information management system 1.

First, a designer of the product produces a drawing of the product, and produces BOM database 51 based on the component number identifying each of at least one component constituting the product and a structure of the product (step S1).

Subsequently, the designer of the process produces BOP database 52 based on the design content (step S2), and produces BOE database 53 (step S3).

Furthermore, the designer of the process produces first association database 54 based on the design content (step S4) and produces second association database 55 (step S5).

The person in charge of product delivery produces provision permission database 70 indicating the provision permission of each of the plurality of items regarding the quality of the product to the supply destination based on the contract content with the supply destination of the product (step S6). Thus, the pre-processing ends.

### <Flow of information management processing after production start>

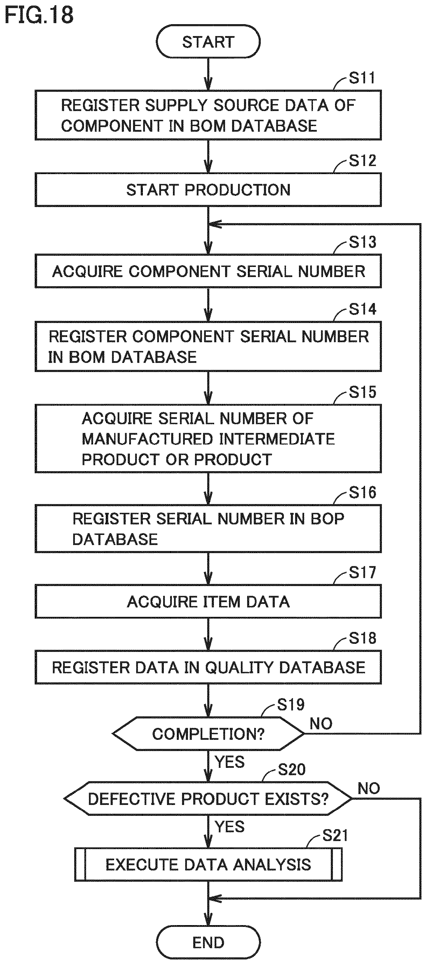

Fig. 18 is a flowchart illustrating a flow of information management processing. For example, the flowchart in Fig. 18 is executed for each lot. Hereinafter, it is assumed that the flowchart in Fig. 18 is executed for each lot.

As illustrated in Fig. 18, processor 101 of server 100 registers the supply source data in BOM database 51 according to the delivery of the component used for the product of the target lot (step S11). In the supply source data, for each individual of the delivered components, the component serial number of the individual is associated with the supplier number identifying the supply source of the individual. For example, as illustrated in Fig. 11, supply source data 56A is registered in BOM database 51A.

Subsequently, processor 201 of manufacturing controller 200 controls the operation of the facility installed in each process to start the production of the target lot (step S12).

Subsequently, processor 201 acquires the component serial number identifying the individual of the component used in the process from each process (step S13).

Subsequently, in step S14, in response to the acquisition of the component serial number from each process, processor 101 of server 100 specifies the target component used in the process using first association database 54. Then, processor 101 registers the component serial numbers in the order acquired by manufacturing controller 200 in the hierarchy of the target components in BOM database 51.

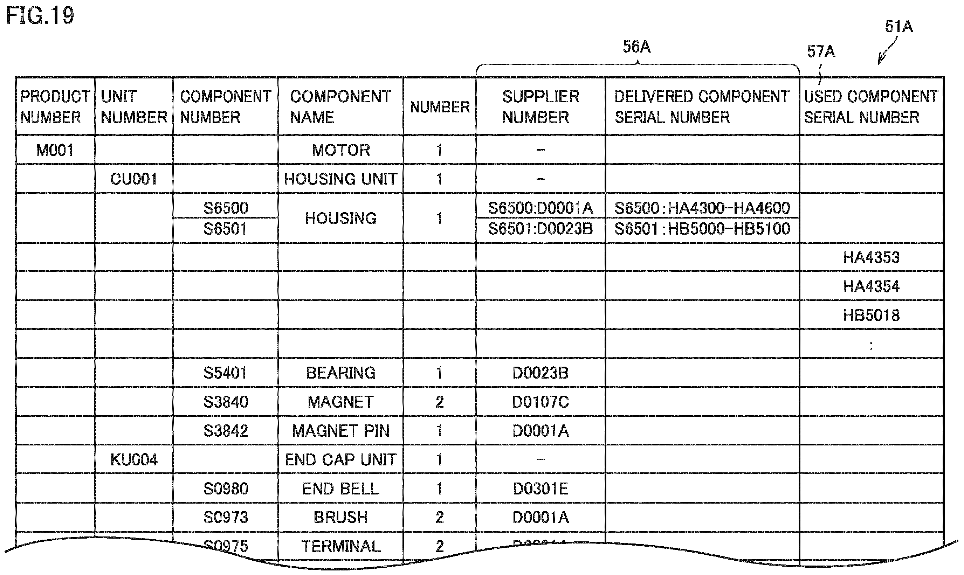

Fig. 19 is a view illustrating an example of the BOM database in which the component serial number of the used component is registered. Fig. 19 illustrates BOM database 51A represented in a table format. As illustrated in Fig. 19, BOM database 51A includes a data item 57A that registers the component serial number acquired from each process. The component serial numbers are registered in BOM database 51A in the acquired order. For this reason, in the example of Fig. 19, it is understood that the component serial numbers "HA4353", "HA4354", "HB5018", ••• are acquired from the process in this order.

Each time the intermediate product or the product is manufactured in each process, processor 201 of manufacturing controller 200 acquires the serial number (the unit serial number or the product serial number) identifying the individual of the intermediate product or the product (step S15). Processor 201 outputs the serial number acquired from each process to server 100.

In response to the acquisition of the serial number identifying the individual of the intermediate product or the product from each process, processor 101 of server 100 registers the serial number in the hierarchy of the process of BOP database 52 in the acquired order (step S16).

Processor 201 of manufacturing controller 200 acquires at least one item data regarding the quality of the intermediate product or the product manufactured by each process (step S17). Processor 201 outputs the item data acquired from each process to server 100.

In response to the acquisition of at least one item data corresponding to each individual of the intermediate product or the product from each process, processor 101 of server 100 registers the at least one item data in quality database 60 corresponding to the process (step S18).

Processor 101 determines whether the production of the target lot is completed (step S19). For example, processor 101 may determine whether the production of the target lot is completed based on the production plan from the MES.

When the production of the target lot is not completed (NO in step S19), the information management processing returns to step S13.

When the production of the target lot is completed (YES in step S19), processor 101 determines whether a defective product exists based on quality database 60 (step S20). For example, based on quality database 60 A_2 in Fig. 13, processor 101 determines that the individual having the product serial number "MA0002" is the defective product. When the defective product does not exist (NO in step S20), the information management processing ends.

When the defective product exists (YES in step S20), processor 101 executes data analysis (step S21). After step S21, the information management processing ends.

### <Subroutine in step S21>

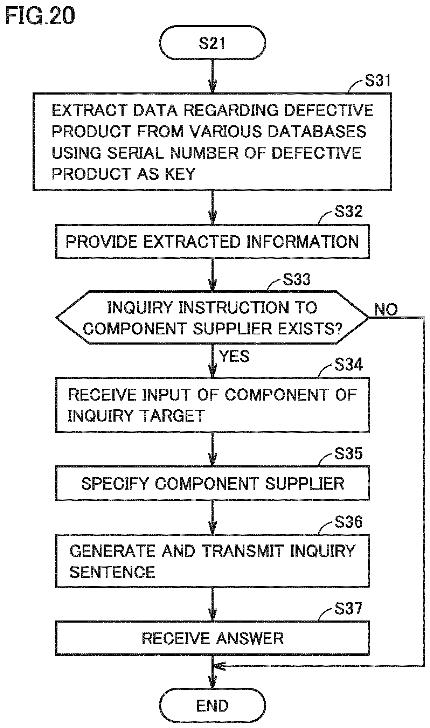

Fig. 20 is a flowchart illustrating a flow of processing of a subroutine in step S21 in Fig. 18.

First, processor 101 of server 100 extracts the data regarding the defective product from various databases using the serial number of the defective product as a key (step S31). Specifically, processor 101 extracts the unit serial number of the intermediate product constituting the defective product, the quality data set corresponding to the defective product or the intermediate product constituting the defective product, the component serial number of the component constituting the defective product, the supplier number identifying the supply source of the component constituting the defective product, the process number identifying the process used for manufacturing the defective product, a facility number identifying the facility used for manufacturing the defective product, and the like.

For example, in the case of the example in Fig. 1, the product serial number "MA00002" of the defective product is registered second in the hierarchy of the "motor assembling process" in BOP database 52. Accordingly, processor 101 determines that the defective product is manufactured second. As a result, processor 101 specifies the housing unit having the unit serial number "00002" registered second in the hierarchy of the "housing unit assembling process" as the intermediate product constituting the defective product. Furthermore, the processor specifies the housing having a component serial number "HB5018" registered second in the hierarchy of "housing" in BOM database 51 as the component constituting the defective product.

Furthermore, processor 101 specifies the quality data set corresponding to the unit serial number "000002" of quality database 60A_1 in Fig. 12 as the quality data set regarding the quality of the intermediate product constituting the defective product. That is, processor 101 specifies the worker in charge of manufacturing the intermediate product constituting the defective product and the work start time.

Furthermore, processor 101 specifies the quality data set corresponding to the product serial number "MA00002" of quality database 60A_2 in Fig. 13 as the quality data set regarding the quality of the defective product. That is, processor 101 specifies the worker in charge of manufacturing the defective product and the work start time.

Furthermore, processor 101 specifies "D0023B" corresponding to the component serial number "HB5018" in supply source data 56A included in BOM database 51A in Fig. 19 as the supplier number identifying the supply source of the component constituting the defective product.

Subsequently, processor 101 provides the information extracted in step S31 (step S32). Specifically, processor 101 generates a screen indicating the specified information, and causes display device 140 (see Fig. 4) to display the generated screen.

The production manager investigates the defect cause based on the provided information. As described above, the provided information includes information regarding the defective product, and the intermediate product and the component constituting the defective product. Accordingly, the production manager can easily investigate the defect cause.

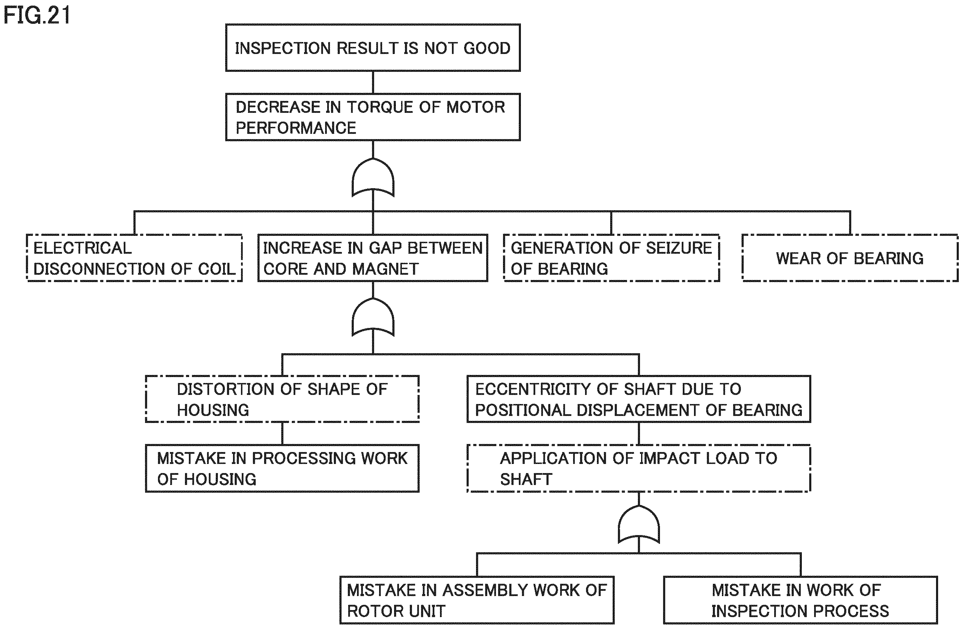

Fig. 21 is a view illustrating a method of investigating a cause of a motor defect. Fig. 21 illustrates a tree structure of a plurality of possible causes that may be generated in the motor. The tree structure in Fig. 21 is previously constructed based on the structure of the motor, the investigation result of the past defect cause, and the like.

As illustrated in Fig. 21, cause candidates of "decrease in torque of motor performance" include "electrical disconnection of coil", "increase in gap between core and magnet", "generation of seizure of bearing", and "wear of bearing". "Distortion of shape of housing" and "eccentricity of shaft due to positional deviation of the bearing" can be cited as the cause candidate of "increase in gap between core and magnet". "Mistake in processing work of housing" can be cited as the cause candidate of "distortion of shape of housing". "Application of impact load to shaft" can be cited as the cause candidate of "eccentricity of shaft due to positional displacement of bearing". "Mistake in assembly work of rotor unit" and "mistake in work of inspection process" can be cited as the cause candidate of "application of impact load to shaft".

The production manager may investigate the cause candidates located at the end of the tree structure in Fig. 21. The production manager may check whether the cause candidates "electrical disconnection of coil", "generation of seizure of bearing", and "wear of bearing" surrounded by an alternate long and short dash line among the cause candidates located at the end are the defect cause by investigating the motor itself that is the product.

The production manager checks whether the cause candidates "mistake in assembling work of rotor unit" and "mistake in work in inspection process" among the cause candidates located at the end are the defect cause using the quality data set corresponding to each of the "rotor unit assembling process" and the "inspection process". Specifically, the production manager can check whether the cause candidates "mistake in assembling work of rotor unit" and "mistake in work in inspection process" are the defect causes by inquiring the worker indicated by the quality data set.

The production manager cannot immediately check whether the cause candidate "mistake in processing operation of housing" among the cause candidates located at the end is the defect cause. Accordingly, the production manager inputs an inquiry instruction to the component supplier to server 100.

Subsequently, processor 101 determines whether the inquiry instruction to the component supplier is input to input device 150 (step S33). When the inquiry instruction to the component supplier is not input (NO in step S33), step S21 ends.

When the inquiry instruction to the component supplier is input (YES in step S33), processor 101 receives the input of the component of an inquiry target (step S34). For example, when there is a possibility that the cause candidate "error in processing operation of housing component" is the defect cause, the production manager inputs "housing" as the component of the inquiry target.

In response to the input, processor 101 specifies the component supplier of an inquiry destination (step S35). Specifically, processor 101 specifies the component serial number of the component of the inquiry target constituting the defective product.

For example, when the component of the inquiry target is "housing" and when the serial number of the defective product is "MA00002", processor 101 specifies the component serial number "HB5018" based on BOM database 51 and BOP database 52 in Fig. 1. Then, processor 101 specifies the component supplier identified by a supplier number "DB0023B" corresponding to the component serial number "HB5018" as the inquiry destination based on supply source data 56A of BOM database 51A in Fig. 11. In the example of BOM database 51A in Fig. 11, the component having a component number "S6500" that is an authorized product and a component having a component number "S6501" that is a substitute exist as the component "housing". The supplier number "DB0023B" corresponds to the component supplier that supplies the substitute. Accordingly, the component supplier that supplies the substitute is specified as the inquiry destination.

Subsequently, processor 101 generates an inquiry sentence and transmits the generated inquiry sentence to the inquiry destination (step S36). Processor 101 may generate the inquiry sentence in response to the input to input device 150, or may generate the inquiry sentence by incorporating the component serial number of the inquiry target in a previously-produced fixed phrase.

Thereafter, processor 101 receives answer information from the inquiry destination (step S37). The received answer information is displayed on display device 140. After step S37, step S21 ends.

### <Flow of answer processing>

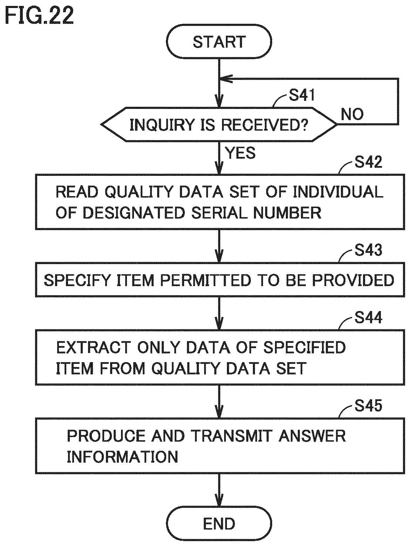

Fig. 22 is a flowchart illustrating a flow of answer processing. As illustrated in Fig. 22, processor 101 of server 100 determines whether an inquiry from another server 100 is received (step S41). When the inquiry is not received (NO in step S41), the answer processing returns to step S41.

When the inquiry is received (YES in step S41), processor 101 reads the quality data set corresponding to the individual having the serial number designated in the inquiry from quality database 60 (step S42). In step S42, processor 101 reads not only the quality data set corresponding to the same product serial number as the designated serial number but also the quality data set corresponding to the intermediate product constituting the product with the product serial number. The method for searching the unit serial number of the intermediate product constituting the product with the product serial number is as described above.

Subsequently, processor 101 specifies the item permitted to be provided to the supply destination based on the provision permission database 70 (step S43).

Processor 101 extracts, from the quality data set read in step S42, only item data permitted to be provided (step S44).

Processor 101 produces the answer information including the information indicated by the extracted item data, and transmits the answer information to the inquiry source (step S45). After step S45, the answer processing ends.

### <Modification>

In the above description, server 100 includes BOM database 51, BOP database 52, BOE database 53, quality database 60, and provision permission database 70. However, these databases may be distributed and located on different devices.

In the above description, as illustrated in Fig. 19, BOM database 51A includes data item 57A, in which the component serial number of the used component is registered, separately from supply source data 56A. In this case, the component serial number is redundantly registered in data item 57A and supply source data 56A. Consequently, supply source data 56A and data item 57A may be combined.

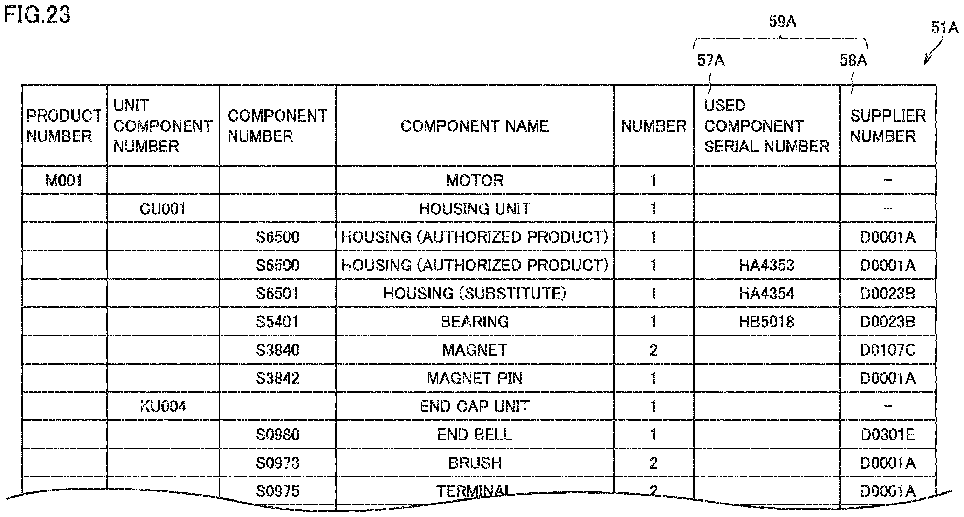

Fig. 23 is a view illustrating a modification of the BOM database. BOM database 51A in Fig. 23 includes data item 57A in which the component serial number of the used component is registered and a data item 58A in which the supplier number identifying the component supplier of the supply source of the used component is registered. In this case, the data registered in data items 57A, 58A constitutes supply source data 59A that associates the component serial number of the individual with the supplier number identifying the supply source of the individual for each individual of the components.

When registering the component serial number of the used component in BOM database 51A, processor 101 of server 100 also registers the supplier number identifying the component supplier of the supply source of the component in BOM database 51A. Processor 101 may specify the supplier number corresponding to the used component by accessing the database in which a list of component serial numbers of components delivered from the component supplier is associated with the supplier number identifying the component supplier.

In the above description, it is assumed that BOP database 52 and quality database 60 are associated with each other on a one-to-one basis. However, in the company, a plurality of lines may be installed for one product. In this case, a plurality of quality databases 60 can be provided for each line. On the other hand, one BOP database 52 is provided in the company or the factory. In such a case, BOP database 52 is produced so as to indicate the hierarchical structure of processes for each line. That is, in BOP database 52, the process number identifying each process identifies the line in which the process is installed and the process. Then, when the unit serial number (or product serial number) is acquired from a certain process of a certain line, the unit serial number (or product serial number) is registered in the hierarchy corresponding to the process of the line in BOP database 52.

In addition, BOM database 51 is also produced so as to indicate the hierarchical structure of components for each line. That is, in BOM database 51, the component number identifying each component identifies the line in which the component is used and the component. Then, when the component serial number is acquired from a certain process of a certain line, the component serial number is registered in the hierarchy corresponding to the component of the line in BOM database 51.

Thus, the component constituting the target individual of the product manufactured in each line can be specified even when BOM database 51 and BOP database 52 are associated with quality database 60 on a one-to-many basis.

### §3 Appendix

As described above, the embodiment includes the following disclosure.

### (Configuration 1)

An information management system (1, 1A, 1B) including:
a BOM database (51, 51A) configured to indicate a hierarchical structure of at least one component constituting a product;
a BOP database (52, 52A) configured to indicate a hierarchical structure of at least one process producing the product;
a quality database (60, 60A, 60B) configured to associate first identification information identifying an individual of an intermediate product or the product manufactured by the process with a quality data set regarding quality of the individual for each of the at least one process;
an acquisition section (21A, 21B, 201) configured to acquire second identification information identifying an individual of a target component used in the process in the at least one component, and the first identification information corresponding to the intermediate product or the product manufactured in the process according to work order of the process from each of the at least one process; and
a registration section (10A, 10B, 101),
wherein the registration section (10A, 10B, 101)
registers the second identification information in a hierarchy of the target component of the BOM database (51, 51A) in the order acquired by the acquisition section
in response to the acquisition of the second identification information from each of the at least one process, and
registers the first identification information in a hierarchy of the process of the BOP database (52, 52A) in the order acquired by the acquisition section in response to the acquisition of the first identification information from each of the at least one process.

### (Configuration 2)

The information management system (1, 1A, 1B) described in configuration 1, further including a search section (11A, 11B, 101) configured to search the second identification information of each individual of the at least one component constituting a target individual of the product using the BOM database (51, 51A) and the BOP database (52, 52A).

### (Configuration 3)

The information management system (1, 1A, 1B) described in configuration 2, further including an inquiry section (12A, 12B, 101) configured to specify third identification information corresponding to the second identification information searched by the search section (11A, 11B, 101) based on the BOM database (51, 51A), and transmit inquiry about quality of the individual indicated by the second identification information searched by the search section to a supply source indicated by the specified third identification information,
wherein the BOM database (51, 51A) includes, for each individual of the at least one component, supply source data (56A, 59A) that associates the second identification information of the individual with the third identification information identifying the supply source of the individual.

### (Configuration 4)

The information management system (1, 1A, 1B) described in any one of configurations 1 to 3, further including:
a provision permission database (70A, 70B) configured to indicate provision permission of each of the plurality of items to a supply destination of the product; and
an answer section (12A, 12B, 101) configured to generate answer information in response to receiving an inquiry about the quality of the target individual of the product from the supply destination, and transmit the generated answer information to the supply destination,
wherein the quality data set includes item data indicating each of a plurality of items, and
the answer section (12A, 12B, 101)
reads the quality data set of the target individual from the quality database,
specifies at least one item that can be provided based on the provision permission database (70A, 70B),
extracts the item data corresponding to each of the specified at least one item from the read quality data set, and
includes the extracted item data in the answer information.

### (Configuration 5)

An information management method in which a BOM database (51, 51A) indicating a hierarchical structure of at least one component constituting a product, a BOP database (52, 52A) indicating a hierarchical structure of at least one process producing the product, and a quality database (60, 60A, 60B) associating first identification information identifying an individual of an intermediate product or the product manufactured by the process with a quality data set regarding quality of the individual for each of the at least one process are used,
the information management method including:
(S13, S15) acquiring second identification information identifying an individual of a target component used in the process in the at least one component, and the first identification information corresponding to the intermediate product or the product manufactured in the process according to work order of the process from each of the at least one process;
(S14) registering the second identification information in a hierarchy of the target component in the BOM database (51, 51A) in the acquired order in response to the acquisition of the second identification information from each of the at least one process; and
(S16) registering the first identification information in a hierarchy of the process of the BOP database (52, 52A) in the acquired order in response to the acquisition of the first identification information from each of the at least one process.

Although the embodiment of the present invention has been described, it should be considered that the disclosed embodiment is an example in all respects and not restrictive. The scope of the present invention is indicated by the claims, and it is intended that all modifications within the meaning and scope of the claims are included in the present invention.

## Claims

1. An information management system (1, 1A, 1B) comprising:
a BOM database (51, 51A) configured to indicate a hierarchical structure of at least one component constituting a product;
a BOP database (52, 52A) configured to indicate a hierarchical structure of at least one process producing the product;
a quality database (60, 60A, 60B) configured to associate first identification information identifying an individual of an intermediate product or the product manufactured by the process with a quality data set regarding quality of the individual for each of the at least one process;
an acquisition section (21A, 21B, 201) configured to acquire second identification information identifying an individual of a target component used in the process in the at least one component, and the first identification information corresponding to the intermediate product or the product manufactured in the process according to work order of the process from each of the at least one process; and
a registration section (10A, 10B, 101),
wherein the registration section (10A, 10B, 101):
registers the second identification information in a hierarchy of the target component of the BOM database (51, 51A) in the order acquired by the acquisition section in response to acquisition of the second identification information from each of the at least one process; and
registers the first identification information in a hierarchy of the process of the BOP database (52, 52A) in the order acquired by the acquisition section in response to acquisition of the first identification information from each of the at least one process.

2. The information management system (1, 1A, 1B) according to claim 1, further comprising a search section (11A, 11B, 101) configured to search the second identification information of each individual of the at least one component constituting a target individual of the product using the BOM database (51, 51A) and the BOP database (52, 52A).

3. The information management system (1, 1A, 1B) according to claim 2, further comprising an inquiry section (12A, 12B, 101) configured to specify third identification information corresponding to the second identification information searched by the search section (11A, 11B, 101) based on the BOM database (51, 51A), and transmit inquiry about quality of the individual indicated by the second identification information searched by the search section to a supply source indicated by the specified third identification information,
wherein the BOM database (51, 51A) includes, for each individual of the at least one component, supply source data (56A, 59A) that associates the second identification information of the individual with the third identification information identifying the supply source of the individual.

4. The information management system (1, 1A, 1B) according to any one of claims 1 to 3, further comprising:
a provision permission database (70A, 70B) configured to indicate provision permission of each of a plurality of items to a supply destination of the product; and
an answer section (12A, 12B, 101) configured to generate answer information in response to receiving an inquiry about the quality of a target individual of the product from the supply destination, and transmit the answer information to the supply destination,
wherein the quality data set includes item data indicating each of the plurality of items, and
the answer section (12A, 12B, 101):
reads the quality data set of the target individual from the quality database (60, 60A, 60B);
specifies at least one item permitted to be provided, based on the provision permission database (70A, 70B);
extracts the item data corresponding to each of the specified at least one item from the read quality data set; and
includes the extracted item data in the answer information.

5. An information management method in which i) a BOM database (51, 51A) indicating a hierarchical structure of at least one component constituting a product, ii) a BOP database (52, 52A) indicating a hierarchical structure of at least one process producing the product, and iii) a quality database (60, 60A, 60B) associating first identification information identifying an individual of an intermediate product or the product manufactured by the process with a quality data set regarding quality of the individual for each of the at least one process are used,
the information management method comprising:
acquiring (S13, S15) second identification information identifying an individual of a target component used in the process in the at least one component, and the first identification information corresponding to the intermediate product or the product manufactured in the process according to work order of the process from each of the at least one process;
registering (S14) the second identification information in a hierarchy of the target component in the BOM database (51, 51A) in the acquired order in response to acquisition of the second identification information from each of the at least one process; and
registering (S16) the first identification information in a hierarchy of the process of the BOP database (52, 52A) in the acquired order in response to acquisition of the first identification information from each of the at least one process.

6. The information management method according to claim 5, further comprising searching the second identification information of each individual of the at least one component constituting a target individual of the product using the BOM database (51, 51A) and the BOP database (52, 52A).

7. The information management method according to claim 6, further comprising:
specifying (S35) third identification information corresponding to the searched second identification information based on the BOM database (51, 51A); and
transmitting (S36) inquiry about quality of the individual indicated by the searched second identification information to a supply source indicated by the specified third identification information,
wherein the BOM database (51, 51A) includes, for each individual of the at least one component, supply source data (56A, 59A) that associates the second identification information of the individual with the third identification information identifying the supply source of the individual.

8. The information management method according to any one of claims 5 to 7, further comprising:
generating (S42 to S45) answer information in response to the inquiry about the quality of a target individual of the product from a supply destination of the product, and
transmitting (S45) the answer information to the supply destination,
wherein the quality data set includes item data indicating each of a plurality of items, and
the generating answer information includes:
reading (S42) the quality data set of the target individual from the quality database (60, 60A, 60B);
specifying (S43) at least one item permitted to be provided based on a provision permission database (70A, 70B) indicating provision permission of each of the plurality of items to a supply destination of the product;
extracting (S44) the item data corresponding to each of the specified at least one item from the read quality data set; and
including (S45) the extracted item data in the answer information.
